Europäisches Patentamt

European Patent Office

Office européen des brevets

(19)

(11) EP 1 422 667 A1

(12) EUROPEAN PATENT APPLICATION

(43) Date of publication:
26.05.2004 Bulletin 2004/22

(51) Int Cl.⁷: G06T 15/50

(21) Application number: 03257280.2

(22) Date of filing: 18.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 19.11.2002 US 299210

(71) Applicant: ATI Technologies Inc.
Markham, Ontario L3T 7X6 (CA)

(72) Inventors:
• Bleiweiss, Avi I.
Sunnyvalde California 94087 (US)
• Preetham, Arcot
Sunnyvale California 94089 (US)

(74) Representative: Howe, Steven
Lloyd Wise
Commonwealth House,
1-19 New Oxford Street
London WC1A 1LW (GB)

(54) Shading language interface and method

(57) A graphics processing system includes at least one processor; and memory, coupled to the at least one processor, the memory including instructions that when executed on the at least one processor, causes the at least one processor to: receive a high level shading description data of a scene to be rendered; determine low level shading stream in response to the high level shading description data, wherein the low level shading data conforms to rendering hardware constraints; and provide the low level shading data to an application for hardware rendering. A graphics processing method includes receiving a high level shading description data of a scene to be rendered; determining low level shading data in response to the high level shading description data, wherein the low level shading data conforms to rendering hardware constraints; and providing the low level shading stream to an application for hardware rendering.

START

RECEIVE HIGH LEVEL SHADING
DESCRIPTION DATA FOR A
SCENE TO BE RENDERED — 100

DETERMINE LOW LEVEL
SHADING DATA IN RESPONSE
TO THE HIGH LEVEL SHADING — 102
DESCRIPTION DATA, WHEREIN
THE LOW LEVEL SHADING DATA
CONFORMS TO RENDERING
HARDWARE CONSTRAINTS

PROVIDING THE LOW LEVEL
SHADING DATA TO AN — 104
APPLICATION FOR HARDWARE
RENDERING

END

FIG. 6

EP 1 422 667 A1

## EP 1 422 667 A1

**Description**

The present invention generally relates to graphics processing systems and, more particularly, to a graphics processing tool used for scene rendering and editing.

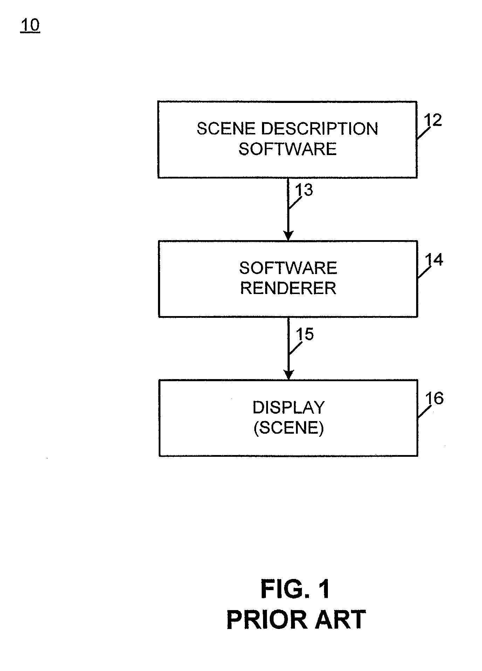

Computer graphics systems are known to include, for example, one or more processors, memory and one or more display devices. FIG. 1 is a schematic block diagram of a conventional software rendering system 10. Application developers, for example, content creators, typically employ digital content creation (DCC) application software 12 to describe (e.g. model) objects and scenes and the shading of the objects within the scenes that are to be presented on the display device. Shading descriptions are typically written in high level languages, for example, the RenderMan Shading Language. In order to preview the modeled scene, the scene description 13 is compiled in software renderers 14, for example, PRMAN, Mental Ray, or those embedded in DCC applications like 3DS Max, Maya or XSI, and the compiled scene 15 is then previewed on a suitable display device 16. The display device 16 may be, for example, a CRT, flat panel display, high definition television (HDTV), projector or any other suitable display device.

A drawback associated with conventional software rendering systems 10 is that they are slow. Depending on the complexity of the scene description 13, it can take upwards of an hour for the rendering software 14 to compile the scene description 13 and provide the scene 15 on the display device 16. Another drawback associated with software rendering systems 10 is that the scene description 13 must be re-compiled each time a modification is made to the scene. Thus, previewing a scene that has been only slightly changed, for example, changing the shading or texture of an object within the scene, requires the entire scene description 13 to be re-compiled. Given the relative slowness of the conventional software renderers 14, the time required to modify and preview a scene becomes prohibitive. This presents a significant problem for content creators who frequently need to make slight modifications to scene parameters before the entire scene is suitable for display.

To overcome the slowness exhibited by rendering software 14, prior solutions called for converting the scene description 13 into a series of three dimensional graphics library calls to a plurality of texture lookup tables to perform, for example, the shading required by the scene description 13. A drawback with this approach is that the several accesses to the plurality of look up tables typically takes a significant amount of memory; thereby, taking processing resources away from other operations.

According to a first aspect of the present invention, a graphics processing system comprises:

at least one processor; and

memory, coupled to the at least one processor, the memory including instructions that when executed on the at least one processor, causes the at least one processor to: receive high level shading description data of a scene to be rendered; determine low level shading data in response to the high level shading description data, wherein the low level shading data conforms to rendering hardware constraints; and provide the low level shading data to an application for hardware rendering.

According to a second aspect of the present invention, a graphics processing method comprises:

receiving high level shading description data of a scene to be rendered;
determining low level shading data in response to the high level shading description data, wherein the low level shading data conforms to rendering hardware constraints; and
providing the low level shading data to an application for hardware rendering.

According to a third aspect of the present invention, a graphics processing circuit comprises:

a parser circuit operative to receive high level shading description data of a scene to be rendered and provide a multi-branch data structure in response to the high level shading description data;

a folding circuit, coupled to the parser circuit, operative to provide an in-line data structure in response to the multi-branch data structure;

an optimizer circuit, coupled to the folding circuit, operative to provide intermediate shading data in response to the in-line data structure, the intermediate shading data including constant values for expressions within the in-line data structure; and

a target code generation circuit, coupled to the optimizer circuit, operative to provide low level shading data corresponding to the scene to be rendered in response to the intermediate shading data, the low level shading data including shading control data, operative to modify visual characteristics of the scene to be rendered.

The present invention will be described, by way of example, with reference to the accompanying drawings, in which:

FIG. 1 is a schematic block diagram of a conventional software rendering system;

FIG. 2 is a schematic block diagram of a graphics processing system employing an example of the shading language interface according to one embodiment of the present invention;

FIG. 3 is a schematic block diagram of the shading language interface according to one embodiment of the present invention;

FIG. 4 is an illustration of an exemplary multi-branch data structure provided by the parser circuit of the shading language interface according to one embodiment of the present invention;

FIG. 5 is an illustration of an exemplary in-line data structure provided by the folding circuit of the shading language interface according to one embodiment of the present invention; and

FIGS. 6-7 are flow charts illustrating a graphics processing method such as a method performed by a shading language interface circuit according to one embodiment of the present invention.

A graphics processing system includes at least one processor, and memory containing instructions that is coupled to the at least one processor. When executed, the instructions cause the at least one processor to receive high level shading description data of a scene to be rendered. Next, low level shading data is determined in response to the high level shading description data, where the low level shading data conforms to rendering hardware constraints. The low level shading data is then provided to an application for subsequent rendering by the rendering hardware. The rendered scene is then displayed on a display device. Alternatively, the low level shading data may be provided directly to rendering hardware.

A graphics processing method includes receiving high level shading description data of a scene to be rendered. Next, low level shading data describing the scene to be rendered, in a suitable hardware executable format, is determined in response to the high level shading description data. The low level shading data conforms to rendering hardware constraints. Then, the low level shading data is provided to an application, where the low level shading data is combined with geometric data relating to the scene before the scene is subsequently rendered by rendering hardware.

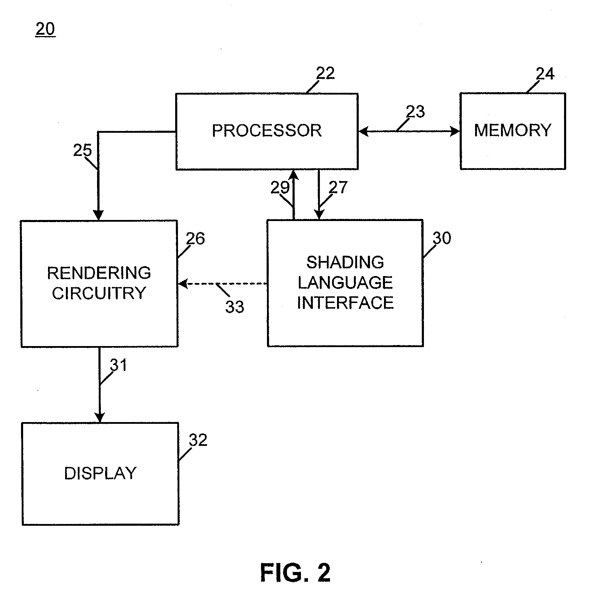

The low level shading data is provided, for example, in assembly language or any suitable language that can be executed by applicable shader hardware of a graphics chip or other graphics processing circuitry. The low level shading data may also include shading control data that allows a user (e.g. content creator) to modify the visual characteristics of an object and/or scene without having to recompile the shading description. By employing the shading language interface and method of the present invention, object and/or scene previewing and rendering performance is enhanced as compared to conventional software rendering systems as shading description compiling does not have to be performed after every modification. An exemplary embodiment of the present invention will now be described with reference to FIGS. 2-7.

FIG. 2 is a schematic block diagram of a graphics processing system 20 employing an example of a shading language interface circuit 30 according to one embodiment of the present invention. The graphics processing system 20 includes a processor 22, for example a host processor, memory 24, rendering hardware or circuitry 26, operative to provide pixel data 31 corresponding to an object and/or scene to be presented on a display 43, and the shading language interface circuit 30 of the present invention. The memory 24 may be part of (e.g. on the same chip as) the graphics processing system 20 or external to the graphics processing system 20. The memory 24 may include a single memory device or a plurality of memory devices. Such a memory device may include, but not be limited to, RAM, ROM, distributed memory such as servers on a network, CD-ROM or any other suitable device that stores digital data.

The processor 22, executes application programs, for example, 3DS Max, Maya, XSI and any other suitable modeling, rendering and shading description programs, stored in the memory 24 and provides high level shading description data 27 of a scene to be rendered. In addition to the shading description data 27, the processor 22, among other things, generates scene geometry data (not shown) associated with the scene to be rendered. The processor 22 may be, for example, an Intel Pentium® type processor, a workstation or other suitable processing device.

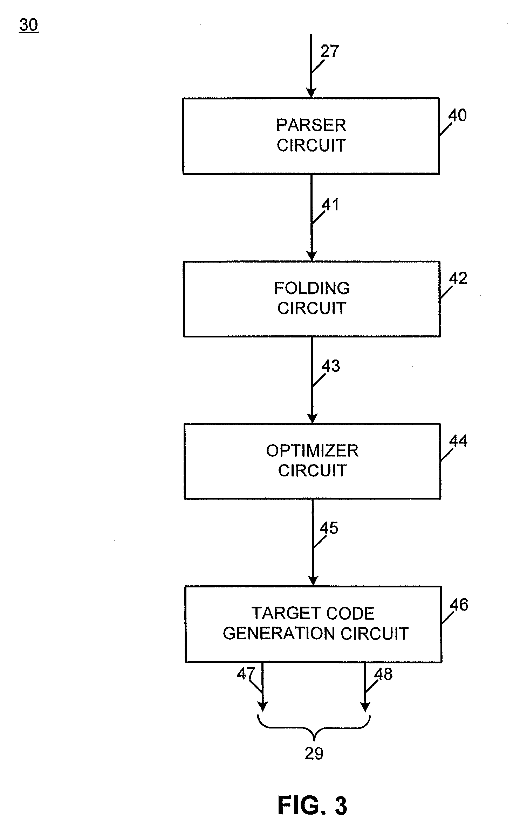

The shading language interface circuit 30 receives the high level shading description data 27 from the processor 22, and converts the high level shading description data 27 into low level (e.g. assembly language or suitable shader-based language) shading data 29 that the rendering circuitry 26 recognizes and can execute. The low level shading data 29 is provided to the application running on the processor 22 that produced the high level shading description. The low level shading data 29 is combined with the scene geometry data (not shown) to provide geometric data 25 that is transmitted to the rendering circuitry 26 for subsequent rendering. In this fashion, the shading for the scene will be performed and rendered by the rendering circuitry hardware 26 as opposed to software rendering. This provides for significant speed improvement in scene rendering as software rendering is essentially eliminated. Alternately, the low level shading data 29 may be provided to the rendering circuitry 26 directly from the shading language interface circuit 30, as identified by the dashed line 33. In this alternate embodiment, the processor 22 provides the scene geometry data 25 of the scene to the rendered circuitry 26, where the low level shading data 33 is combined with the scene geometry data 25 in the rendering circuitry 26 before rendering. The operation of the shading language interface circuit 30 will be described in greater detail below with reference to FIGS. 3-7.

The rendering circuitry 26, may include, for example, registers, vertex shaders, pixel shaders, rasterizers, blending circuitry, display controllers and any other suitable rendering hardware such as the Radeon 9700 graphics chip, manufactured by the assignee of the present invention, for providing pixel data 31 representing a scene to be presented on the display 32 in response to the geometric data 25. The display 32 may be, for example, a CRT, flat panel display, high definition television (HDTV), projector or any other suitable display device.

FIG. 3 is a schematic block diagram of the shading language interface circuit 30 according to one embodiment of the present invention. In application, the shading language interface circuit 30 is a software application executed by the processor 22 (FIG. 2). However, it will be appreciated by one of ordinary skill in the art that the shading language interface circuit 30 may be implemented in any suitable structure such as, but not limited to, a digital signal processor (DSP), a dedicated piece of hardware (e.g. ASIC), state machine or any device that manipulates signals based on operational instructions or software executing on one or more processing devices, capable of generating low level (e. g. assembly language) shading data 29 based on high level shading description data 27, firmware or any suitable combination thereof. The operational instructions or software would be stored in the memory 24 (FIG. 2).

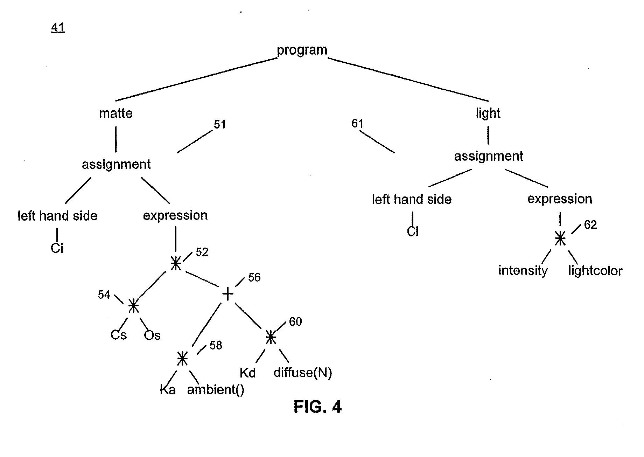

A parser circuit 40 receives the high level language shading description data 27 from the processor 22 (FIG. 2) or an application executing on the processor 22 and converts the high level shading description into a suitable multi-branch data structure 41 (FIG. 4). This conversion can be accomplished using any parsing algorithms known to those of ordinary skill in the art. An exemplary high level shading description 27, in the RenderMan Shading Language, provided by the processor 22 or an application executing on the processor 22 is provided below:

```
surface matte (float ka=1;
                float kd=1)
{
        point Nf = faceforward (normalize(N)),I)0;
        Oi = Os;
        Ci = Os*Cs*(ka*ambient() + kd*diffuse(Nf));
}


light
distantlight  (float intensity = 1;
                color lightcolor = 1;
                point from = point "shader" (0,-,-2);
                point to = point "shader" (0,0,0);)
{
        solar (to-from, 0) {
           Cl = intensity * lightcolor;
        }
}
```

which describes an object having a matte front face being illuminated by a light source having a given intensity.

Referring briefly to FIG. 4, the multi-branch data structure 41 includes two branches. A first branch 51 corresponds to the surface description of an object in the scene where a value Ci is defined by an expression containing a series of operators 52-60, where "*" represents multiplication and "+" represents addition and associated operands (e. g. Os, Cs, ka and kd). Note that the operands ka and kd are shading description inputs that, in the example given, are each assigned a constant value. A second branch 61 corresponds to the description of the lighting of the object within the scene where a value CI is defined by an expression containing a single operator 62 (e.g. multiplication) and two operands, "intensity" and "lightcolor". This multi-branch data structure 41 is provided to a folding circuit 42 (FIG. 3). Although illustrated as containing two branches 51 and 61, the multi-branch data structure 41 may contain as many branches as there are corresponding assignments in the high level shading description 27.

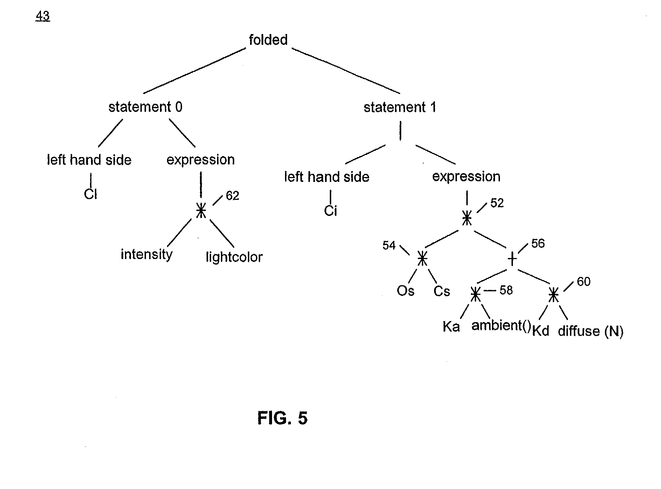

The folding circuit 42 converts the multi-branch data structure 41 into a single branch or in-line data structure 43. Referring briefly to FIG. 5, the expressions within the in-line data structure 43 are arranged according to the order in which the corresponding shading operations are to be performed. According to the present invention, lighting operations are performed before surface operations; thus, the expression (e.g. statement 0) relating to the lighting operation is placed in a top or first position, with the expression (e.g. statement 1) relating to the surface operation being placed thereafter. One of ordinary skill in the art will appreciate that the order of performance can vary from that described above. For example, surface operations can be performed before lighting operations, and such variations are contemplated by the present invention and are within the spirit and scope of the present disclosure. The in-line data structure 43 is provided to an optimizer circuit 44.

The optimizer circuit 44 converts the in-line data structure 43 into intermediate shading data 45. The intermediate shading data 45 is generated by the optimizer circuit 44 converting multiple constant expressions into a single constant value; removing any unused portions of code, if any, contained in the in-line data structure 43; and determining if the resulting values conform or comply with applicable hardware constraints of the rendering circuitry 26 (FIG. 2), for example, available components of a corresponding register, instruction length or other applicable constraint. The optimizer circuit 44, for example, will convert the light expression (e.g. statement 0) into a single constant value. For purposes of illustration and not limitation, assume the following set of statements:

float A = 2, B = 3
float C = A + B

The optimizer circuit 44 reduces the expression to C = 5.

In like manner, the optimizer circuit 44 performs a reduction operation on the surface expression. For purposes of illustration and not limitation, assume that the operands ka and kd have been assigned a constant value of 1. Alternatively, the operands ka and kd can be inputs of the high level shading description 27. The optimizer circuit 44 reduces the surface expression to:

$$Ci = Os * Cs * (ambient() + diffuse (Nf))$$

where Ci represents the matte value to be applied to the front surface of the object and "Os" and "Cs" correspond to the surface material properties assigned to register locations where the corresponding operand values can be retrieved.

After the lighting and surface expressions have been reduced to their simplest forms, the optimizer circuit 44 removes any unused portions (e.g. operands, operators) from the reduced expressions, if any. The optimizer circuit 44 then determines if the resulting prescribed graphics processor resources used exceed the capability of the rendering circuitry 26 (FIG. 2). Alternatively, the incoming shading construct to the optimizer circuit 44 is broken into segments, with each segment conforming to hardware resource constraints. For example, the optimizer circuit 44 will determine if the number of shader instructions generated exceeds the available code space of the rendering circuitry 26 (FIG. 2). Extra care is made by the optimizer circuit 44 to allocate scalar and vector values in a register space in the most compact manner. After the resource conformance checks have been completed, the intermediate shading data (e.g. reduced and optimized lighting and surface expressions) 45 is transmitted to a target code generation circuit 46.

The target code generation circuit 46 generates the low level shading data 29 representing the shading to be applied to a rendered object and/or scene in a format (e.g. assembly language or any other suitable shader language) that is recognized and executable by the rendering circuitry 26 (FIG. 2). The low level shading data 29 includes, for example, data representing assembly code instructions 47 describing the shading to be applied to a rendered object and shading control data 48 which provides the application or processor 22 (FIG. 2) with information on how to map shader inputs (e.g. ka, kd, intensity, light color and other suitable inputs) to hardware resources, for example, registers within the rendering circuitry 26 (FIG. 2), where such data may be written to or read from.

The assembly code instructions 47 can be generated from the intermediate data 45 according to any suitable parsing technique known in the art. Exemplary assembly code instructions or low level code 47 provided by the target code generation circuit 46 for performing the shading operation defined by the high level shading description 27 is provided below:

ATTRIB Color0 = fragment.color.primary;

```
ATTRIB Colo1 = fragment.color.secondary;

ATTRIB Tex0 = fragment.texcoord[0];

PARAM Const0 = {3, 0, 0, 0 };
PARAM Const1 = program.local [1];
PARAM Const2 = program.local [2];
PARAM Const3 = program.local [3];
PARAM Const4 = program.local [4];

TEMP Temp0;
TEMP Temp1;
TEMP Temp2;
TEMP Temp3;

OUTPUT Output0 = result.color;

MUL Temp1, Const1.g, Const2;
DP3 Temp0.g, Tex0, Tex0;
RSQ Temp0.g, Temp0.g;
MUL Temp2, Temp0.g, Tex0;
ADD Temp3, Const3, -Const4;
DP3 Temp0.g, -Temp3, -Temp3;
RSQ Temp0.g, Temp0.g;
MUL Temp3, Temp0.g, -Temp3;
DP3 Temp0.g, Temp2, Temp3;
MAX Temp0.g, Const0.g, Temp0.g;
MUL Temp1, Temp1, Temp0.g;
MUL Temp1, Const1.r, Temp1;
MUL Temp1, Color0, Temp1;
MUL Temp1, Color1, Temp1;
MOV Temp1.a, Color1.r;
MOV Output0, Temp1;

END
```

Exemplary shading control data 48, provided by the target code generation circuit 46, for mapping the shader input values to the available rendering circuitry 26 (FIG. 2) hardware is provided below:

```
c 1 0 kd 1
c 1 1 intensity 1
c 2-1 lightcolor 1111
```

where, for example, the value of shader input kd is indicated as being readable from and written to component 0 of constant register 1 of the rendering circuitry 26 hardware. By providing the shading control data 48, a content creator has the ability to modify at least one scene parameter (e.g. matte surface shading parameter kd) and have the modified scene rendered at the speed of the rendering circuitry hardware 26 and provided on the display 42 (FIG. 2), without having to recompile the entire shading description 27. This provides for much more efficient previewing and modifying of scenes as compared to conventional software rendering systems.

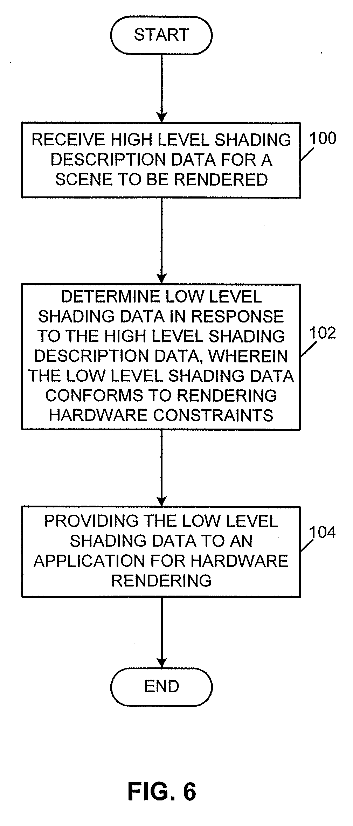

FIGS. 6-7 are flow charts illustrating the method performed by the shading language interface circuit according to one embodiment of the present invention. The process begins in step 100 where the high level shading description data for a scene to be rendered is received. This is accomplished, for example, by the parser circuit 40 (FIG. 3) receiving the high level shading description 27 of the scene to be rendered.

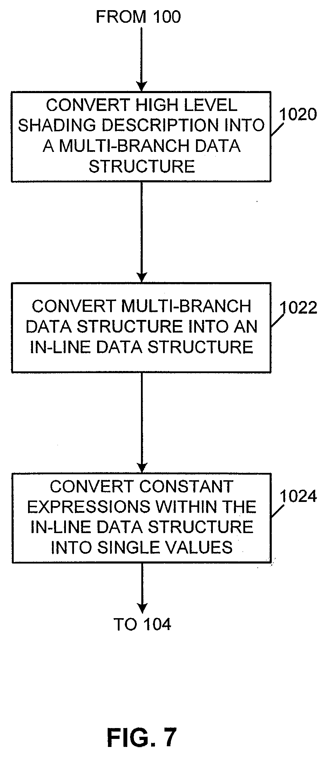

In step 102, the low level shading data corresponding to the scene to be rendered is determined in response to the high level shading description of the scene. Referring briefly to FIG. 7, this is accomplished, for example, by the folding circuit 42 (FIG. 3) converting the high level shading description data 27 into a multi-branch data structure 41 (FIG. 4), where the shading and any other suitable appearance (e.g. material) parameters are partitioned into their component parts in step 1020. In step 1022, the optimizer circuit 44 (FIG. 3) converts the multi-branch data structure 41 (FIG. 4) into an in-line or single branch data structure 43 (FIG. 5), with any unused code being removed from the in-line data structure 43. In step 1024, any expressions within the in-line data structure 43 having a constant value are replaced by the constant value; thereby, generating intermediate shading data 45 (FIG. 3). Additionally, the intermediate shading data 45, including the constant values are formatted to comply with any constraints associated with the rendering circuitry 26 (FIG. 2).

In step 104, the low level shading data is provided to an application for subsequent hardware rendering. This is accomplished, for example, by the target code generation circuit 46 (FIG. 3) receiving the intermediate shading data 45 (FIG. 4) and converting the intermediate shading data into suitable low level shading data (e.g. assembly language instructions or shader specific instructions) 29 that is recognized and executable by the rendering circuitry 26 (FIG. 3). The low level shading data 29, also includes shading control data 48 which provides the processor 22 (FIG. 2) or application running on the processor 22 with the information on how to map shader description inputs with hardware (e.g. registers) resources of the rendering circuitry 26 (FIG. 2). The target code generation circuit 46 (FIG. 3) provides the map information, for example, by scanning the rendering circuitry 26 (FIG. 2) and assigning the shader description inputs to one of the available registers of other suitable hardware resources.

In one embodiment, the target code generation circuit 46 (FIG. 3) provides the low level shading data 29 to an application that may be running on a host processor or other suitable device. Within the application, the low level shading data 29 is combined with the scene geometry data to provide the geometric data 25 (FIG. 2) that is provided to the rendering circuitry 26 (FIG. 2) for subsequent rendering and presentation on a display 32 (FIG. 2). In an alternate embodiment, the target code generation circuit 46 (FIG. 3) provides the low level shading data 33 directly to the rendering circuitry 26 (FIG. 2). In either manner, the described object and/or scene is rendered in hardware, for example, the rendering circuitry 26 (FIG. 2). This is advantageous as the present invention takes advantages of the speed in which the rendering circuitry 26 (FIG. 2) renders images.

As the low level data 47 (FIG. 3) that is to be applied to the objects that make up the scene is already in a format that the rendering circuitry 26 (FIG. 2) recognizes and can process, scene rendering time is greatly reduced as compared with software rendering as the shading to be applied to the object and/or scene does not have to be separately compiled or otherwise processed by rendering software before the object and/or scene is viewable on the display 32 (FIG. 2). Thus, content creators are able to more quickly preview the scenes they are designing. Additionally, through the use of the shading control data 48 (FIG. 3) that accompanies the low level data 47 (FIG. 3), content creators can modify the appearance (e.g. lighting, surface textures, or any other suitable value) of an object and/or scene and quickly preview the modified object and/or scene without having to recompile the modified scene description data.

The above detailed description of the invention and the examples described therein have been provided for the purposes of illustration and description. Although an exemplary embodiment of the present invention has been described in detail herein with reference to the accompanying drawings, it is to be understood and appreciated that the present invention is not limited to the embodiment disclosed, and that various changes and modifications to the invention are possible in light of the above teaching. Accordingly, the scope of the present invention is to be defined by the claims appended hereto.

## Claims

1.  A graphics processing system, comprising:

    at least one processor; and

    memory, coupled to the at least one processor, the memory including instructions that when executed on the at least one processor, causes the at least one processor to: receive high level shading description data of a scene to be rendered; determine low level shading data in response to the high level shading description data, wherein the low level shading data conforms to rendering hardware constraints; and provide the low level shading data to an application for hardware rendering.

2.  The graphics processing system of claim 1, wherein the instructions further cause the at least one processor to determine shading control data, operative to modify visual characteristics of the scene to be rendered in response to the high level shading description data.

3.  The graphics processing system of claim 2, wherein the instructions further cause the at least one processor to convert the high level shading description data into a multi-branch data structure; convert the multi-branch data structure into an in-line data structure; and convert constant expressions within the in-line data structure into single values when determining the low level shading data.

**4.** The graphics processing system of any one of the preceding claims, further comprising rendering circuitry, coupled to the at least one processor, operative to provide pixel data corresponding to the scene to be rendered, formatted for presentation on a display in response to the low level shading data, wherein the instructions cause the at least one processor to provide the low level shading data in a format executable by the rendering circuitry.

**5.** A graphics processing method comprising:

receiving high level shading description data of a scene to be rendered;
determining low level shading data in response to the high level shading description data, wherein the low level shading data conforms to rendering hardware constraints; and
providing the low level shading data to an application for hardware rendering.

**6.** The graphics processing method of claim 5, wherein determining the low level shading data further comprises converting the high level shading description data into a multi-branch data structure; converting the multi-branch data structure into an in-line data structure; and converting constant expressions within the in-line data structure into single values.

**7.** The graphics processing method of claim 5 or claim 6, further comprising determining shading control data, operative to modify the visual characteristics of the scene to be rendered, in response to the high level shading description, wherein the shading control data is provided directly to rendering hardware.

**8.** A graphics processing circuit, comprising:

a parser circuit operative to receive high level shading description data of a scene to be rendered and provide a multi-branch data structure in response to the high level shading description data;

a folding circuit, coupled to the parser circuit, operative to provide an in-line data structure in response to the multi-branch data structure;

an optimizer circuit, coupled to the folding circuit, operative to provide intermediate shading data in response to the in-line data structure, the intermediate shading data including constant values for expressions within the in-line data structure; and

a target code generation circuit, coupled to the optimizer circuit, operative to provide low level shading data corresponding to the scene to be rendered in response to the intermediate shading data, the low level shading data including shading control data, operative to modify visual characteristics of the scene to be rendered.

**9.** The graphics processing circuit of claim 9, further comprising rendering circuitry, coupled to the target code generation circuit, operative to provide pixel data corresponding the scene to be rendered in response to the low level shading data.

**10.** The graphics processing circuit of claim 9, wherein the optimizer circuit further comprises circuitry operative to format the intermediate shading data to conform to the constraints of the rendering circuitry.

10

**FIG. 1**
**PRIOR ART**

FIG. 2

30

27

PARSER
CIRCUIT
40

41

FOLDING
CIRCUIT
42

43

OPTIMIZER
CIRCUIT
44

45

TARGET CODE
GENERATION CIRCUIT
46

47
48

29

**FIG. 3**

FIG. 4

43

**FIG. 5**

START

RECEIVE HIGH LEVEL SHADING DESCRIPTION DATA FOR A SCENE TO BE RENDERED — 100

DETERMINE LOW LEVEL SHADING DATA IN RESPONSE TO THE HIGH LEVEL SHADING DESCRIPTION DATA, WHEREIN THE LOW LEVEL SHADING DATA CONFORMS TO RENDERING HARDWARE CONSTRAINTS — 102

PROVIDING THE LOW LEVEL SHADING DATA TO AN APPLICATION FOR HARDWARE RENDERING — 104

END

**FIG. 6**

FROM 100

CONVERT HIGH LEVEL
SHADING DESCRIPTION INTO
A MULTI-BRANCH DATA
STRUCTURE
— 1020

CONVERT MULTI-BRANCH
DATA STRUCTURE INTO AN
IN-LINE DATA STRUCTURE
— 1022

CONVERT CONSTANT
EXPRESSIONS WITHIN THE
IN-LINE DATA STRUCTURE
INTO SINGLE VALUES
— 1024

TO 104

**FIG. 7**

**European Patent Office**

**EUROPEAN SEARCH REPORT**

Application Number

EP 03 25 7280

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 52083 A (SILICON GRAPHICS INC) 14 October 1999 (1999-10-14) * abstract * * page 3, line 20 - page 4, line 10 * * page 7, line 3 - page 9, line 2 * * page 13, line 4 - page 15, line 18 * | 1-10 | G06T15/50 |
| X | PEERCY M S ET AL: "INTERACTIVE MULTI-PASS PROGRAMMABLE SHADING" COMPUTER GRAPHICS. SIGGRAPH 2000 CONFERENCE PROCEEDINGS. NEW ORLEANS, LA, JULY 23 - 28, 2000, COMPUTER GRAPHICS PROCEEDINGS. SIGGRAPH, NEW YORK, NY: ACM, US, 23 July 2000 (2000-07-23), pages 425-432, XP001003583 ISBN: 1-58113-208-5 * Sections 1.2, 2.3, 4.2 * | 1-10 | |
| X | PROUDFOOT K ET AL: "A REAL-TIME PROCEDURAL SHADING SYSTEM FOR PROGRAMMABLE GRAPHICS HARDWARE" COMPUTER GRAPHICS. SIGGRAPH 2001. CONFERENCE PROCEEDINGS. LOS ANGELES, CA, AUG. 12 - 17, 2001, COMPUTER GRAPHICS PROCEEDINGS. SIGGRAPH, NEW YORK, NY: ACM, US, 12 August 2001 (2001-08-12), pages 159-170, XP001049884 ISBN: 1-58113-374-X * abstract * * Sections 1, 3 * | 1,5 | TECHNICAL FIELDS SEARCHED (Int.Cl.7) G06T |

-/--

The present search report has been drawn up for all claims

| Place of search | Date of completion of the search | Examiner |
|---|---|---|
| MUNICH | 12 February 2004 | Zamuner, U |

**European Patent Office**

## EUROPEAN SEARCH REPORT

Application Number

EP 03 25 7280

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | OLANO M ET AL: "A shading language on graphics hardware: the PixelFlow shading system"<br>COMPUTER GRAPHICS. PROCEEDINGS. SIGGRAPH 98 CONFERENCE PROCEEDINGS, PROCEEDINGS OF SIGGRAPH 98: 25TH INTERNATIONAL CONFERENCE ON COMPUTER GRAPHICS AND INTERACTIVE TECHNIQUES, ORLANDO, FL, USA, 19-24 JULY 1998,<br>pages 159-168, XP002270024<br>1998, New York, NY, USA, ACM, USA<br>ISBN: 0-89791-999-8<br>* abstract *<br>* Section 6 *<br>----- | 1-10 | |
| | | | **TECHNICAL FIELDS SEARCHED (Int.Cl.7)** |

The present search report has been drawn up for all claims

| Place of search | Date of completion of the search | Examiner |
|---|---|---|
| MUNICH | 12 February 2004 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 422 667 A1

**ANNEX TO THE EUROPEAN SEARCH REPORT
ON EUROPEAN PATENT APPLICATION NO.**                    EP 03 25 7280

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2004

| Patent document cited in search report | Publication date | Patent family member(s) | Publication date |
|---|---|---|---|
| WO 9952083 A | 14-10-1999 | US 6578197 B1 | 10-06-2003 |
| | | DE 69904579 D1 | 30-01-2003 |
| | | DE 69904579 T2 | 18-09-2003 |
| | | EP 1070301 A1 | 24-01-2001 |
| | | JP 2002510826 T | 09-04-2002 |
| | | WO 9952083 A1 | 14-10-1999 |

EPO FORM P0459

For more details about this annex : see Official Journal of the European Patent Office, No. 12/82

18